# NEW EUROPEAN PATENT SPECIFICATION

(11) **EP 1 023 397 B2**
(45) Date of publication and mention of the opposition decision: **21.03.2007**
(45) Mention of the grant of the patent: 04.12.2002
(21) Application number: 98949653.4
(22) Date of filing: 30.09.1998
(51) Int. Cl.: C08L 77/00

(54) **POLYAMIDE COMPOSITION FOR WELDING**
POLYAMID SCHWEISSZUSAMMENSETZUNG
COMPOSITION DE POLYAMIDE POUR SOUDAGE

(30) Priority: 30.09.1997 JP 28111497
(43) Date of publication of application: 02.08.2000
(73) Proprietor: E.I. DU PONT DE NEMOURS AND COMPANY, Wilmington, Delaware 19898 (US)
(72) Inventor: NOZAKI, Masahiro, Utsunomiya Tochigi 321-0932 (JP); KUROE, Tatsuo, Nagoya Aichi 465-0058 (JP)
(74) Representative: Morf, Jan Stefan
(86) International application number: PCT/US1998/020499
(87) International publication number: WO 1999/016829

(56) References cited:
- EP-A- 0 104 436
- EP-A- 0 458 470
- EP-A- 0 488 335
- EP-A- 0 532 963
- EP-A- 0 580 387
- EP-A- 0 735 098
- WO-A-94/25539
- WO-A-95/26868
- JP-A- 6 100 774
- JP-A- 6 172 643
- JP-A- 6 271 766
- JP-A- 6 271 768
- JP-A- 6 271 769
- JP-A- 6 271 787
- JP-A- 8 281 827
- ELLIS T S: "COMMUNICATIONS TO THE EDITOR ON THE MISCIBILITY OF BLENDS OF NYLON 66 AND POLY(HEXAMETHYLENE ISOPTHALAMIDE), NYLON" MACROMOLECULES, vol. 29, no. 5, 26 February 1996, pages 1836-1838, XP000555560
- H. WANG ET AL.: "MODIFICATION OF NYLON-6 WITH WHOLLY RIDGID POLY(M-PHENYLENE ISOPHTHALAMIDE" JOURNAL OF APPLIED POLYMER SCIENCE, vol. 43, 1991, pages 259-269, XP002089900

## Description

### Field of the Invention

The present invention relates to the use of polyamide compositions for welding, for example, in die slide injection molding and in injection molding. This invention relates more particularly to the use of polyamide compositions for welding which contain aromatic polyamides and aliphatic polyamides.

### Background of the Invention

The molding of hollow molded articles from polymers such as polyamides and polyesters has traditionally relied upon blow molding and injection molding. In cases where thick-walled hollow molded articles and molded articles with a shape having thick-walled sections and thin-walled sections are produced, the molded article to be produced is molded by injection molding a body that has been divided into two sections, arranging the two sections that have been removed from the molds so that they face each other at their parting lines, then heating and welding. Alternatively, the two sections that have been obtained may be placed in another mold so that they face each other at the parting lines, the molten resin injected about the periphery of the opposed faces, and insert molding (or overlap molding) carried out.

JP-B-2-38377 discloses a method for die slide injection molding, which uses a pair of molds comprising one mold provided with a male mold and a female mold for use in molding the two sections of a hollow molded article, and another mold provided with a female mold and a male mold which respectively face the above male die and female die. The sections are both injection-molded at the same time using these molds, after which one of the molds is made to slide so as to cause the sections remaining in the respective female molds to become mutually opposed. By aligning the respective molds in this way, the sections are mutually abutted, then molten resin is injected about the periphery of the abutted faces, thus mutually welding the sections.

Injection welding materials which are known to be used in the production of hollow molded articles and the production of sealed molded articles include compositions including copolymers of a polyamide 6 component with a polyamide 66 component, and an inorganic filler (JP-B 8-337718); compositions including resin mixtures of a polyamide 6/66 copolymer with polyamide 12, and an inorganic filler (JP-A 9-57789); and resin mixtures of polyamide 66, polyamide 12 and polyamide 6/66 copolymer, and an inorganic filler (JP-A 9-57790).

Several other references pertain to the general field of the invention, see generally EP-A-0 104 436, 4 April 1984; EP-A-0 580 387, Mitsubishi Gas Chemical Company, 26 January 1994; EP-A-0 458 470, 27 November 1991; EP-A-0 488 335, 3 June 1992; EP-A-0 532 963, 24 March 1993; Macromolecules, vo.29, no.5,26 February 1996, pages 1836 - 1838, XP000555560; and Journal of Applied Polymer Science, vol.431 1991; pages 259-269, XP002089900. Polyamide blends with a major amount of aliphatic polyamide and a minor amount of aromatic polyamide are known from JP-A 06-172 643, JP-A 08-281 827 and WO 95/26868. However, these references do not disclose the particular blends of the instant invention and their cited benefits.
However, it will be appreciated by those skilled in the art that these materials are insufficient both with respect to weldability and heat resistance.

The object of the present invention is to provide a polyamide composition for welding which has excellent weldability, heat resistance and hydrolysis resistance. More specifically, the object of this invention is to provide polyamide compositions for molding which are highly suitable for such purposes as die sliding injection molding to produce hollow molded articles such as air intake manifolds, and injection molding to produce sealed molded components, in which an internal component has been protected from external influences, such as solenoids, aspirated air temperature sensors, and wheel speed sensors.

### Summary of the Invention

There is disclosed and claimed herein the use of a polyamide composition for welding of at least two members, the composition comprising
(A) an aromatic polyamide having a molar fraction of aromatic monomers among monomer components of said polyamide of at least 0.2, and having a carboxylic acid component consisting of terephthalic acid, isophthalic acid or a mixture of terephthalic acid and isophthalic acid and optionally aliphatic acid; and a diamine component of aliphatic diamine, and.
(B) a fully aliphatic polyamide, and
(C) inorganic filler
   wherein the weight ratio of (A) and (B) is from 95:5 to 80:20 and the inorganic filler is present in an amount of from 5 to 60 percent by weight of the composition.

The diamine component is preferably hexamethylenediamine or a mixture of hexamethylenediamine and 2-methyl pentamethylenediamine.

Another embodiment of the present invention is a polyamide molded article comprised of two or more members, wherein at least two of the members have been welded using the above-described polyamide composition for welding.

### Brief Description of the Drawing

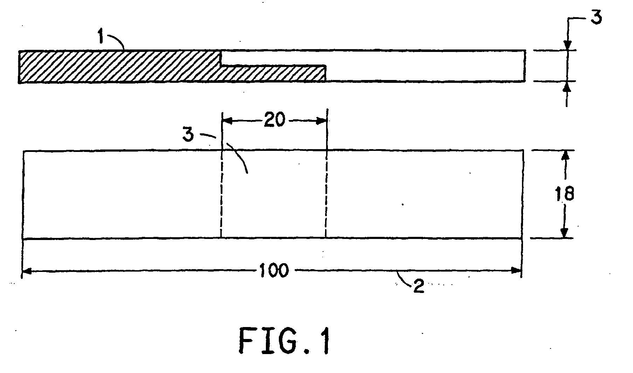

Figure 1 is a test piece for evaluating weldability.

### Detailed Description of the Invention

The polyamide compositions used according to the present invention are welding compositions, and may be employed in any known welding techniques such as injection welding, vibration welding, ultrasonic welding, and spin welding.

The polyamide (A) useful in this invention is an aromatic polyamide in which the molar fraction of the aromatic monomer within the monomer components making up the polyamide is at least 0.2. In other words, this is a polyamide in which one or more of the diamine, dicarboxylic acid, and/or aminocarboxylic acid monomer components making up the polyamide is an aromatic compound, and which is composed of monomers wherein the molar fraction of aromatic monomers, based on all of the monomers, is at least 0.2.

If the molar fraction of the aromatic monomers is less than 0.2, a high heat resistance, and an excellent hydrolysis resistance and chemical resistance cannot be achieved. Moreover, properties such as these are not exhibited even in compositions. The molar fraction of the aromatic monomer is preferably from 0.25 to 0.5, and more preferably from 0.4 to 0.5.

Examples of aromatic monomers that may serve as components in the aromatic polyamide include aromatic diamines, such as p-phenylenediamine, o-phenylenediamine, m-phenylenediamine, p-xylenediamine and m-xylenediamine and terephthalic acid, and isophthalic acid. These aromatic monomers may be used singly or as combinations of two or more thereof.

Monomers other than aromatic monomers which may be present in the aromatic polyamide include aliphatic dicarboxylic acids, aliphatic alkylenediamines, alicyclic alkylenediamines, and aliphatic aminocarboxylic acids. Exemplary aliphatic dicarboxylic acids include adipic acid, sebacic acid, azelaic acid and dodecanedioic acid; these may be used singly or in combinations of two or more thereof. Exemplary aliphatic alkylenediamine, which may be straight-chain or branched, include ethylenediamine, trimethylenediamine, tetramethylenediamine, pentamethylenediamine, hexamethylenediamine, 1,7-diaminoheptane, 1,8-diaminooctane, 1,9-diaminononane, 1,10-diaminodecane, 2-methyl pentamethylenediamine and 2-ethyl tetramethylenediamine. These aliphatic alkylenediamines may be used singly or as combinations of two or more thereof. Exemplary alicyclic alkylenediamines include 1,3-diaminocyclohexane, 1,4-diaminocyclohexane, 1,3-bis(aminomethyl)cyclohexane, bis(aminomethyl)cyclohexane, bis(4-aminocyclohexyl)methane, 4,4'-diamino-3,3'-dimethyldicyclohexylmethane, isophoronediamine and piperazine. These alicyclic alkylenediamines may be used singly or as combinations of two or more thereof. Exemplary aminocarboxylic acids include ε-aminocaproic acid and ω-aminoundecanoic acid, and may be used singly or as combinations of two or more thereof.

The polyamide (A) uses a carboxylic acid component which is terephthalic acid or a mixture of terephthalic acid with isophthalic acid and optionally aliphatic acid, and the diamine component is preferably hexamethylenediamine or a mixture of hexamethylenediamine with 2-methylpentamethylenediamine.

Aliphatic polyamides (B) useful in the present invention include polyamide 66, polyamide 6, polyamide 610, polyamide 612, polyamide 46, polyamide 11, and polyamide 12, and polyamide 66 is especially preferred.

The above-described polyamides (A) and (B) are used in a weight ratio of 95:5 to 80:20.

The compositions used in the invention also contain inorganic fillers in order to increase the mechanical properties. Exemplary inorganic fillers include glass fibers, carbon fibers, potassium titanate whiskers, kaolin, talc and mica, with the use of glass fibers being preferred. The amount of inorganic filler blended into the composition, based on the weight of the composition, is from 5 to 60% by weight, preferably from 7.5 to 50% by weight, and more preferably from 10 to 45% by weight. At less than 5% by weight, the increase in mechanical strength is insufficient, whereas blending in a large amount of more than 60% by weight results in a poor moldability.

In addition to the above-mentioned components, additives such as flame retardants, impact modifiers, heat stabilizers, plasticizers, antioxidants, nucleating agents, dyes, pigments, and parting agents may also be compounded in the inventive compositions within a range that does not compromise the properties thereof.

The polyamide compositions used for welding in the present invention may be produced by a number of conventional methods as will be appreciated by those skilled in the art. Examples of such methods include a method in which two polyamides are mixed, then are kneaded and extruded using a twin-screw extruder or some other melt-kneading apparatus, and pelletized; a method wherein two low-molecular-weight aromatic polyamides are mixed and polymerized, or a method in which extrusion polymerization is carried out concurrent with mixing. It is also possible to carry out melt kneading and molding together using an injection molding machine.

The polyamide composition for welding is used to weld polyamide molded articles composed of two or more members. The members may each be made of a composition containing the same polyamide mixture as the polyamide mixture within the polyamide composition for welding that is used, they may be made of a composition containing a mixture of the same types of polyamides but in a different blending ratio, or they may be made of a composition containing a mixture of different polyamides.

### Examples

### Examples 1-2 and Comparative Examples 1-4

The polyamide shown in Table 1 and glass fibers (chopped strands, from Nippon Sheet Glass Co., Ltd.) were melt-kneaded in a twin-screw extruder (ZSK-40, from W&P), water-cooled, then pelletized. Using the resulting pellets, the primary molded article shown in Fig. 1 was injection molded. This primary molded article 1 was then set in a mold and, using the same pellets, a test piece 2 (18x100x3mm; overlapping portion 3, 18x20mm) was molded by overlap molding (secondary molding). The mold temperature and resin temperature during molding are shown in Table 1.

The tensile shear strength was measured using the test pieces 2 thus obtained. Measurement was carried out in accordance with ASTM D638, at room temperature, and at a test speed of 5 mm/min. The measurement results are shown in Table 2.

The heat resistance was also determined, measurement being carried out in accordance with ASTM D648. The heat distortion temperature (HDT) was measured at 18.6 kg/cm². The measurement results are shown in Table 2.

In addition, the hydrolysis resistance was tested. The test piece 2 was immersed 48 hours in a 50% aqueous solution of ethylene glycol at 150°C, following which the tensile strength was measured. The tensile strength value measured after 250 hours of immersion was computed as a percentage of the original measured value, and this percentage was regarded as the tensile strength retention. The results are shown in Table 2.

The polyamides in the tables were as follows.
- Polymer A:: A polyamide in which the dicarboxylic acid component is terephthalic acid and the diamine components are hexamethylenediamine (HMD) and 2-methyl pentamethylenediamine (MPMD) (HMD:MPMD = 50:50)
- Polymer B:: Polyamide 6
- Polymer C:: Polyamide 66
- Polymer D:: Polyamide 612
- Polymer E:: Polyamide 6T66 (6T:66=55:45)

**Table 1**

| | Ex. 1 | Ex. 2 | Comp. Ex. 1 | Comp. Ex. 2 | Comp. Ex. 3 | Comp. Ex. 4 |
|---|---|---|---|---|---|---|
| Mold temperature in primary molding (°C) | 120 | 120 | 120 | 120 | 120 | 120 |
| Resin temperature in primary molding (°C) | 310 | 340 | 290 | 310 | 290 | 340 |
| Pre-heating temperature (°C) | 120 | 120 | 120 | 120 | 120 | 120 |
| Mold temperature in secondary molding (°C) | 120 | 120 | 80 | 80 | 80 | 120 |
| Resin temperature in secondary molding (°C) | 310 | 340 | 290 | 290 | 290 | 340 |

**Table 2**

| | Ex. 1 | Ex. 2 | Comp. Ex. 1 | Comp. Ex. 2 | Comp. Ex. 3 | Comp. Ex. 4 |
|---|---|---|---|---|---|---|
| Polymer A (wt %) | 52.0 | 58.5 | 0 | 0 | 0 | 65.0 |
| Polymer B (wt%) | 0 | 0 | 70.0 | 0 | 0 | 0 |
| Polymer C (wt %) | 13.0 | 6.5 | 0 | 70.0 | 33.5 | 0 |
| Polymer D (wt %) | 0 | 0 | 0 | 0 | 33.5 | 0 |
| Glass fibers (wt%) | 35.0 | 35.0 | 30.0 | 30.0 | 33.0 | 35.0 |
| Tensile shear strength (kg/cm²) | 232.3 | 200.0 | 217.8 | 84.3 | 102.3 | 88.7 |
| Heat distortion temperature (°C) | 255 | 260 | 215 | 254 | 215 | 260 |
| Tensile strength retention (%) | 76.6 | 81.0 | <50 | 73.5 | 68.6 | 87.2 |

**TABLE 3**

| | Ex. 3 | Comp. Ex. 5 | Comp. Ex. 6 | Comp. Ex. 7 |
|---|---|---|---|---|
| Mold temperature in primary molding (°C) | 120 | 120 | 120 | 120 |
| Resin temperature in primary molding (°C) | 340 | 340 | 340 | 340 |
| Pre-heating temperature (°C) | 120 | 120 | 120 | 120 |
| Mold temperature in secondary molding (°C) | 120 | 120 | 120 | 120 |
| Resin temperature in secondary molding (°C) | 340 | 340 | 340 | 340 |

**TABLE 4**

| | Ex. 3 | Comp. Ex. 5 | Comp. Ex. 6 | Comp. Ex. 7 |
|---|---|---|---|---|
| Polymer A (wt%) | 61.75 | 32.5 | 13.0 | 6.50 |
| Polymer B (wt %) | 0 | 0 | 0 | 0 |
| Polymer C (wt%) | 3.25 | 32.5 | 52.0 | 58.50 |
| Polymer D (wt %) | 0 | 0 | 0 | 0 |
| Polymer E (wt %) | 0 | 0 | 0 | 0 |
| Glass fibers (wt %) | 35.0 | 35.0 | 35.0 | 35.0 |
| Tensile shear strength (kg/cm²) | 197.2 | 212.4 | 190.8 | 205.2 |
| Heat distortion temperature (°C) | 263 | 240 | 250 | 253 |
| Tensile strength retention (%) | 84.0 | 67.0 | 67.1 | 70.5 |

Upon comparing Examples 1 and 2 with Comparative Example 1, it is apparent that although polyamide 6 has good weldability, the heat resistance and hydrolysis resistance are insufficient.

### Examples 3 and Comparative Examples 5 to 7

The polyamides of Example 3 and Comparative Examples 5 to 7 as described in Tables 3 and 4 were prepared and tested in the same manner as described above.

## Claims

1. Use of a polyamide composition for welding of at least two members, the composition comprising
(A) an aromatic polyamide having a molar fraction of aromatic monomers among monomer components of said polyamide of at least 0.2, and having a carboxylic acid component consisting of terephthalic acid, isophthalic acid or a mixture of terephthalic acid and isophthalic acid and optionally aliphatic acid; and a diamine component of aliphatic diamine, and
(B) a fully aliphatic polyamide, and
(C) inorganic filler
wherein the weight ratio of (A) and (B) is from 95:5 to 80:20 and the inorganic filler is present in an amount of from 5 to 60 percent by weight of the composition.

2. A polyamide molded article comprised of two or more members, wherein at least two of the members have been welded using the polyamide composition for welding of Claim 1.

3. Use of Claim 1 wherein said carboxylic acid component is terephthalic acid or a mixture of terephthalic acid and isophthalic acid; and said diamine component is hexamethylenediamine or a mixture of hexamethylenediamine and 2-methyl pentamethylenediamine.

## Patentansprüche

1. Verwendung einer Polyamid-Zusammensetzung zum Schweißen mindestens zweier Teile, wobei die Zusammensetzung aufweist:
(A) ein aromatisches Polyamid, das einen Molenbruch von aromatischen Monomeren unter Monomer-Komponenten des Polyamids von mindestens 0,2 hat und das eine Carbonsäure-Komponente hat, bestehend aus Terephthalsäure, Isophthalsäure oder einer Mischung von Terephthalsäure und Isophthalsäure und wahlweise eine aliphatische Säure, und eine Diamin-Komponente eines aliphatischen Diamins; sowie
(B) ein vollständig aliphatisches Polyamid; und
(C) einen anorganischen Füllstoff;
wobei das Gewichtsverhältnis von (A) zu (B) von 95:5 bis 80:20 beträgt und der anorganische Füllstoff in einer Menge von 5 bis 60 Gew.% der Zusammensetzung vorliegt.

2. Polyamid-Formgegenstand, aufweisend zwei oder mehrere Teile, wobei mindestens zwei der Teile unter Verwendung der Polyamid-Zusammensetzung zum Schweißen nach Anspruch 1 verschweißt worden sind.

3. Verwendung nach Anspruch 1, wobei die Carbonsäure-Komponente Terephthalsäure oder einer Mischung von Terephthalsäure und Isophthalsäure ist und die Diamin-Komponente Hexamethylendiamin oder eine Mischung von Hexamethylendiamin und 2-Methylpentamethylendiamin ist.

## Revendications

1. Utilisation d'une composition de polyamide pour souder au moins deux membres, la composition comprenant
(A) un polyamide aromatique ayant une fraction molaire de monomères aromatiques parmi les constituants monomères dudit polyamide d'au moins 0,2, et ayant un constituant acide carboxylique consistant en acide téréphtalique, acide isophtalique ou un mélange d'acide téréphtalique et d'acide isophtalique et facultativement un acide aliphatique; et un constituant diamine de diamine aliphatique, et
(B) un polyamide totalement aliphatique, et
(C) une charge inorganique
dans laquelle le rapport pondéral de (A) et (B) est de 95:5 à 80:20 et la charge inorganique est présente en une quantité de 5 à 60 pour cent en poids de la composition.

2. Article moulé en polyamide comprend deux membres ou plus, dans lequel au moins deux des éléments ont été soudés en utilisant la composition de polyamide pour souder de la revendication 1.

3. Utilisation selon la revendication 1, dans laquelle ledit constituant acide carboxylique est l'acide téréphtalique ou un mélange d'acide téréphtalique et d'acide isophtalique; et ledit constituant diamine est l'hexaméthylènediamine ou un mélange d'hexaméthylènediamine et de 2-méthyl pentaméthylènediamine.
